# EUROPÄISCHE PATENTANMELDUNG

(11) **EP 1 656 833 A1**
(43) Veröffentlichungstag der Anmeldung: **17.05.2006**
(21) Anmeldenummer: 05020066.6
(22) Anmeldetag: 15.09.2005
(51) Int. Cl.: A21B 3/15

(54) **Koch-, Brat- oder Backgerät, insbesondere Backform**

(30) Priorität: 12.11.2004 DE 102004054800
(71) Anmelder: Electrolux Home Products Corporation N.V., 1930 Zaventem (BE)
(72) Erfinder: Reiner, Arnold, 91610 Insingen (DE); Dänzer, Stefan, 91631 Wettringen (DE)
(74) Vertreter: Hochmuth, Jürgen

(57) **Zusammenfassung**

Die Erfindung betrifft ein Koch-, Brat- oder Backgerät, insbesondere eine Backform (1). Um ein Verschnappen der vorzugsweise eben ausgebildeten Backform im Falle von Temperaturdifferenzen in der Backform zu verhindern und trotzdem eine hohe mechanische Stabilität der Backform zu erhalten, ist erfindungsgemäß vorgesehen, dass sie aus zwei Teilen (2, 3) besteht, die im Benutzungszustand der Backform (1) zumindest an definierten Stellen miteinander formschlüssig verbunden sind, wobei das eine Teil (2) eine Trägerstruktur für das andere Teil (3) bildet und das andere Teil (3) aus formelastischem Material besteht.

## Beschreibung

Die Erfindung betrifft ein Koch-, Brat- oder Backgerät, insbesondere eine Backform.

Im Stand der Technik sind Backbleche bekannt, die aus einem im wesentlichen ebenen Metallblech bestehen, das seitliche, sich weitgehend vertikal erstreckende Ränder aufweist. Die von den Rändern eingeschlossene Backfläche ist eben ausgebildet und dient zur Aufnahme des Teigs des Gebäcks. Derartige Bleche dienen auch zum Aufbacken von tiefgefrorenen Lebensmitteln, beispielsweise einer Pizza.

Ein bei Backblechen auftretendes Problem besteht darin, dass es bei einem Temperaturgradienten im Blech, wie er beispielsweise auftritt, wenn auf ein heißes Blech mit einer Temperatur von ca. 260 °C mittig eine noch tiefgefrorene Pizza aufgelegt wird, zu einem diagonalen Verschnappen des Backblechs kommen kann. Die thermischen Spannungen führen dabei zu einer Verspannung des Blechs, die mit einer plötzlichen Bewegung im Blech einhergeht. Dies kann auch erfolgen, wenn beispielsweise ein nasser Lappen auf das heiße Blech aufgelegt oder Wasser auf die garende Speise auf dem heißen Backblech aufgegossen wird.

Die Verschnappung bzw. Verspannung kann zur Folge haben, dass sich das Backblech im Einschubgitter des Backofens verklemmt, was bei der Handhabung des Blechs sehr nachteilig ist. Dasselbe gilt für ein Verkippen auf dem Auszug des Backofens. Weiterhin kann der Koch dadurch gefährdet werden, dass ihn ein plötzliches Verschnappen des Blechs erschreckt, so dass er möglicherweise das Blech bei der Handhabung fallen lässt. Möglich ist es auch, dass durch den Verschnappvorgang heißes Fett von der Oberfläche des Backbleches weggeschleudert wird, was ebenfalls eine Unfallgefahr darstellt.

Ein weiteres Problem bekannter Backbleche besteht darin, dass die Reinigung des Blechs schwierig ist. Zwar werden Backbleche häufig mit einer Beschichtung versehen, die das Lösen des Schmutzes vom Blech erleichtert. Bekannt sind Oberflächenbeschichtungen mit Email oder mit speziellen Kunststoffschichten, beispielsweise aus Polytetraflourethylen (PTFE); diese Beschichtungen sind auch unter der Bezeichnung "easy to clean" bekannt.

Die Reinigung des Blechs ist nichtsdestotrotz schwierig, da es nicht möglich ist, das gesamte Blech gebräuchlicher Größe in einem üblichen Küchenspülbecken unterzubringen. Das Blech kann daher nur abschnittsweise im Spülbecken gereinigt werden, was eine ungünstige Handhabung darstellt. Ferner setzt sich insbesondere an Bohrungen und Prägungen des Blechs besonders leicht Schmutz fest, der schwierig zu entfernen ist.

Es sind bereits Backbleche bzw. Backformen bekannt geworden, die gänzlich aus einem wärmestabilen Kunststoff bestehen, beispielsweise aus Silikon. Dieses Material ist bis ca. 280 °C einsetzbar und sehr leicht zu reinigen. Nachteilig ist hier jedoch, dass ein aus diesem Material bestehendes Backblech nur eine geringe mechanische Eigensteifigkeit aufweist und daher nur einen begrenzten Einsatzbereich hat.

Problematisch bei vorbekannten Backblechen ist schließlich die Frage der Aufbewahrung der Bleche während der Nichtbenutzung. Da die Bleche sehr sperrig sind, sind sie zumeist in der Küche nur schwer unterzubringen, da deren verfügbarer Raum zumeist sehr beschränkt ist. Deshalb werden sie meistens im Backofen selber gelagert. Dies erhöht den Handhabungsaufwand. Der Handhabungsaufwand erhöht sich noch, wenn neben Backblechen weitere Ofeneinsätze verfügbar gehalten werden müssen, beispielsweise ein Grillrost.

Der Erfindung liegt daher die Aufgabe zugrunde, ein Koch-, Brat- oder Backgerät, insbesondere ein Backblech, der eingangs genannten Art so fortzubilden, dass die genannten Nachteile vermieden werden. Es soll also ein Backblech geschaffen werden, das - insbesondere bei ebener Ausbildung des Blechs bzw. der Form - nicht der Gefahr einer Verschnappung bzw. Verspannung infolge eines Temperaturgradienten bzw. bei Temperaturdifferenzen im Blech unterliegt. Dennoch soll eine hohe mechanische Steifigkeit des Backblechs bzw. der Backform sichergestellt werden, um eine gute Handhabbarkeit zu gewährleisten. Ferner soll die Backform leicht zu reinigen sein und in einfacher Weise raumsparend bei Nichtbenutzung aufbewahrbar sein.

Die Lösung dieser Aufgabe durch die Erfindung ist dadurch gekennzeichnet, dass das vorgeschlagene Koch-, Brat- oder Backgerät aus zwei Teilen besteht, die im Benutzungszustand des Koch-, Brat- oder Backgeräts zumindest an definierten Stellen miteinander formschlüssig verbunden sind, wobei das eine Teil eine Trägerstruktur für das andere Teil bildet und das andere Teil aus formelastischem Material besteht.

Das Erfindungskonzept sieht also vor, dass das Backblech bzw. die Backform zweiteilig ausgebildet ist, wobei das eine Teil ein Trägerelement darstellt und das andere Teil aus elastischem Material mit geringer Eigensteifigkeit besteht. Das Trägerelement nimmt dabei bei Benutzung des Backblechs bzw. der Backform das Teil mit geringer Eigensteifigkeit formschlüssig auf und stützt es.

Vorzugsweise ist das formelastische Material des anderen Teils des Backblechs bzw. der Backform ein Kunststoff oder ein gummielastisches Material. Insbesondere ist dabei an Silikon gedacht. Dieses Material ist bevorzugt bis ca. 280 °C temperaturstabil, so dass es sich für Koch- bzw. Backzwecke eignet.

Eine Weiterbildung sieht vor, dass das andere Teil eine Koch-, Brat- oder Backfläche aufweist, die in ihrem seitlichen Bereich von sich zumindest im wesentlichen vertikal nach oben erstreckenden Rändern begrenzt wird. Dabei kann die Koch-, Brat- oder Backfläche eben ausgebildet sein. Sie kann auch alternativ hierzu mindestens eine Vertiefung definierter Form zur Aufnahme von Teig eines zu backenden oder zu garenden Lebensmittels aufweisen. Hier seien exemplarisch Ausnehmungen im zweiten Teil der Backform bzw. des Backblechs erwähnt, mit denen Muffins gebacken werden können.

Bevorzugt ist das eine Teil des Backblechs zumindest in Teilen seiner seitlichen Bereiche so ausgebildet, dass es eine zu den Rändern des anderen Teils korrespondierende Form aufweist, die das andere Teil im Benutzungszustand des Koch-, Brat- oder Backgeräts seitlich einfasst.

Das genannte eine Teil des Koch-, Brat- oder Backgeräts besteht bevorzugt aus Metall.

Es kann eine Anzahl drahtartiger Streben aufweisen, die parallel zueinander bzw. gitterförmig angeordnet sind. Die Streben können eine weitgehend ebene Auflagefläche für das genannte andere Teil bilden. Weiterhin kann vorgesehen sein, dass die drahtartigen Streben mit einem umlaufenden Rahmen verbunden, insbesondere verschweißt, sind. Dabei ist bevorzugt der dem umlaufenden Rahmen benachbarte Abschnitt der Streben so ausgeformt, insbesondere gebogen, dass die Streben zusammen mit dem Rahmen eine schüsselförmige Aufnahme für das andere Teil aus formelastischem Material bilden.

Mit Vorteil weisen die drahtartigen Streben einen solchen Durchmesser auf und sind in einem solchen Abstand zueinander angeordnet, dass die Nutzung des einen Teils des Koch-, Brat- oder Backgeräts - nach der Entfernung des anderen Teils - als Grillrost ermöglicht wird. Dabei hat es sich bewährt, wenn die drahtartigen Streben einen Durchmesser zwischen 1 mm und 4 mm aufweisen; sie können weiterhin einen Abstand voneinander zwischen 5 mm und 25 mm aufweisen.

Aufgrund der Materialauswahl des vorzugsweise eben ausgebildeten zweiten Teils des vorgeschlagenen Koch-, Brat- oder Backgeräts ist es nicht mehr möglich, dass es zu einem diagonalen Verschnappen des Blechs bzw. der Form kommt. Dasselbe gilt für das rostartig ausgebildete erste Teil des Geräts, also für das Trägerelement.

Das zweite Teil des Geräts kann zwecks Reinigung vom ersten Teil abgenommen und leicht in einem üblichen Haushaltsspülbecken gereinigt werden, da namentlich bei der Materialwahl Silikon für das zweite Teil eine beliebige Verformung des Teils möglich ist. Aufgrund der Flexibilität des zweiten Teils kann dieses leicht gereinigt werden, zumal Silikon grundsätzlich ein gutes Lösen von Schmutz auf dem Teil ermöglicht.

Ebenfalls kann daher die Lagerung des zweiten Teils des Koch-, Brat- oder Backgeräts in sehr einfacher Weise erfolgen, da das zweite Teil beispielsweise zusammengerollt oder zusammengelegt untergebracht werden kann. Das erste Teil des Koch-, Brat- oder Backgeräts, also das Trägerelement, kann stets im Backofen verbleiben.

Durch die Variabilität des vorgeschlagenen Konzepts zur Ausgestaltung eines Koch-, Brat- oder Backgeräts kann der Benutzer mit nur einem oder noch mit einem zweiten Trägerelement in Form des ersten Teils des Koch-, Brat- oder Backgeräts - bei gleichzeitigem Einsatz auf mehreren Ebenen im Backofen - einen sehr großen Bereich des gesamten Anwendungsspektrums abdecken. Die Trägerelemente dienen wahlweise als Träger für die Silikonauflagen (zweite Teile des Koch-, Brat- oder Backgeräts) oder als Grillrost. Bei Bedarf wird einfach das zweite Teil auf das Trägerteil aufgelegt.

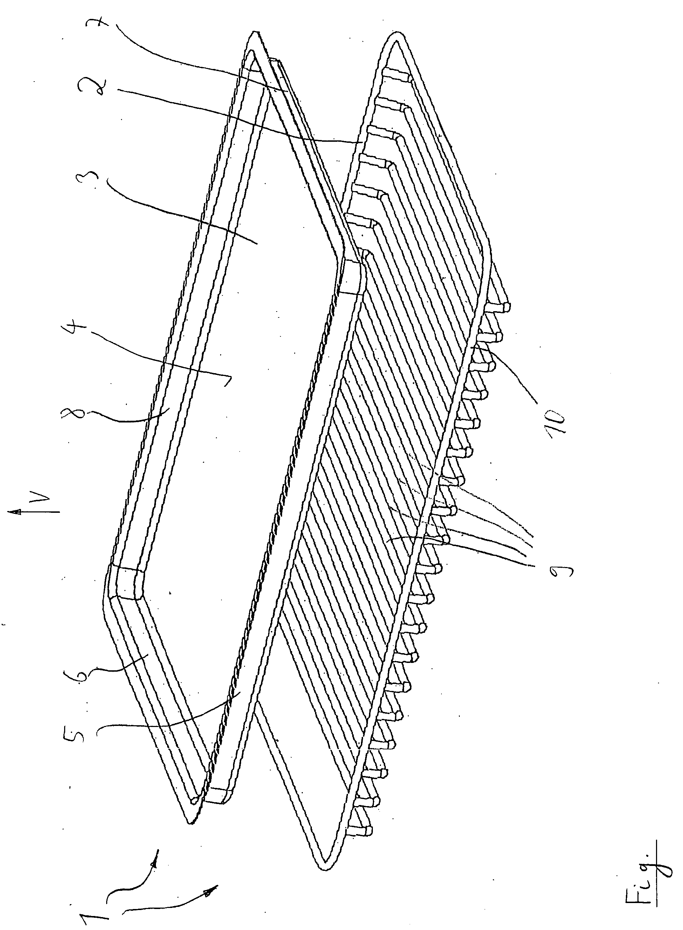

In der Zeichnung ist ein Ausführungsbeispiel der Erfindung dargestellt. Die einzige Figur zeigt in perspektivischer Darstellung ein Koch-, Brat- oder Backgerät, das aus zwei Teilen besteht, wobei beide Teile voneinander beabstandet dargestellt sind.

Das Koch-, Brat- oder Backgerät 1 ist als kombiniertes Back- oder Garblech bzw. als Grillrost ausgebildet. D. h. es kann sowohl zum Kochen, Braten oder Backen als auch zum Grillen verwendet werden.

Hierzu besteht das Koch-, Brat- oder Backgerät 1 aus zwei Teilen, nämlich aus einem ersten Teil 2, das als Trägerteil ausgebildet ist, und einem zweiten Teil 3, das als auf das Trägerteil aufzulegendes Teil ausgebildet ist. Das erste Teil 2 besteht aus Metall, während das zweite Teil 3 aus Silikon gefertigt ist.

Das zweite Teil 3 aus Silikon ist so geformt, dass es eine weitgehend ebene und im Grundriss rechteckige Koch-, Brat- oder Backfläche 4 bildet, die von vier Rändern 5, 6, 7 und 8 begrenzt wird. Die Ränder 5, 6, 7 und 8 erstrecken sich von der Koch-, Brat- oder Backfläche 4 im wesentlichen rechtwinkelig nach oben, d. h. in Richtung der Vertikalen V.

Das erste Teil 2 besteht aus einer Anzahl nebeneinander angeordneter Streben 9, die in ihrem jeweiligen Endbereich umgebogen sind und mit ihrem Ende an einem umlaufenden Rahmen 10 festgeschweißt sind. Damit ist das erste Teil 2 - ohne Einsatz des zweiten Teils 3 aus Silikon - tauglich, als Grillrost eingesetzt zu werden.

Die Streben 9 bilden zusammen mit dem Rahmen 10 eine schüsselförmige Aufnahme, die aufgrund der Wahl des Materials (Metall) sehr steif ist. Indes ist das zweite Teil 3 aufgrund seines Materials (Silikon) labil und verfügt nur über eine geringe mechanische Eigensteifigkeit.

Die Ausformung der'schüsselförmigen Aufnahme des ersten Teils 2 korrespondiert zu der Form des zweiten Teils 3, d. h. das zweite Teil 3 kann passend auf das erste Teil 2 aufgesetzt werden. Dadurch erhält das in das erste Teil 2 eingesetzte zweite Teil 3 eine Unterstützung; das erste Teil 2 fungiert als Trägerelement.

Dabei bilden der Rahmen 10 samt Streben 9 einerseits und das Silikonteil 3 andererseits aufgrund der Ausformung zwei Teile 2, 3, die im Benutzungszustand des Koch-, Brat- oder Backgeräts 1 an definierten Stellen, nämlich entlang des Randes, miteinander formschlüssig verbunden sind. D. h. dass eine Verschiebung des zweiten Teils 3 relativ zum ersten Teil 2 in dem Zustand, in dem das zweite Teil 3 in das erste Teil 2 eingesetzt ist (im Benutzungszustand des Koch-, Brat- oder Backgeräts 1), nicht in eine Richtung senkrecht zur Vertikalen V verschoben werden kann. Das zweite Teil ist vielmehr relativ zum ersten festgelegt.

Die Silikonschale 3 liegt im Benutzungszustand des Geräts 1 also passgenau auf dem Trägerelement 2 auf. Ohne aufgesetztes zweites Teil 3 ist das Trägerelement 2 als Grillrost nutzbar. Die Silikonschale 3 entspricht in Form und Größe im wesentlichen einem üblichen Backblech aus Metall.

Durch die bei der Herstellung einfache Möglichkeit der Formgestaltung der Silikonschale 3 lassen sich auch andere Flächen zur Aufnahme von Teig schaffen, beispielsweise Vertiefungen für das Backen von Muffins. Durch Nutzung verschieden geformter Silikonschalen 3 bei ein und demselben Trägerelements 2 wird ein multifunktionelles Koch-, Brat- oder Backgerät 1 geschaffen.

Die generellen Vorteile der Verwendung einer Silikonform bleiben voll erhalten. So ist die Temperaturbeständigkeit bis ca. 280 °C genauso gegeben wie die sehr gute Reinigungsmöglichkeit der Form. Auf den Einsatz von Backpapier kann dabei vollständig verzichtet werden.

### Bezugszeichenliste

- 1: Koch-, Brat- oder Backgerät (Backblech, Backform)
- 2: Teil des Koch-, Brat- oder Backgeräts
- 3: Teil des Koch-, Brat- oder Backgeräts
- 4: Koch-, Brat- oder Backfläche
- 5: Rand
- 6: Rand
- 7: Rand
- 8: Rand
- 9: drahtartige Strebe
- 10: umlaufender Rahmen

- V: vertikale Richtung

## Patentansprüche

1. Koch-, Brat- oder Backgerät, insbesondere Backform (1), **dadurch gekennzeichnet, dass** es aus zwei Teilen (2, 3) besteht, die im Benutzungszustand des Koch-, Brat- oder Backgeräts (1) zumindest an definierten Stellen miteinander formschlüssig verbunden sind, wobei das eine Teil (2) eine Trägerstruktur für das andere Teil (3) bildet und das andere Teil (3) aus formelastischem Material besteht.

2. Koch-, Brat- oder Backgerät nach Anspruch 1, **dadurch gekennzeichnet, dass** das formelastische Material des anderen Teils (3) ein Kunststoff oder ein gummielastisches Material ist.

3. Koch-, Brat- oder Backgerät nach Anspruch 2, **dadurch gekennzeichnet, dass** das formelastische Material des anderen Teils (3) Silikon ist.

4. Koch-, Brat- oder Backgerät nach einem der Ansprüche 1 bis 3, **dadurch gekennzeichnet, dass** das andere Teil (3) eine Koch-, Brat- oder Backfläche (4) aufweist, die in ihrem seitlichen Bereich von sich zumindest im wesentlichen vertikal (V) erstreckenden Rändern (5, 6, 7, 8) begrenzt wird.

5. Koch-, Brat- oder Backgerät nach Anspruch 4, **dadurch gekennzeichnet, dass** die Koch-, Brat- oder Backfläche (4) eben ausgebildet ist.

6. Koch-, Brat- oder Backgerät nach Anspruch 4, **dadurch gekennzeichnet, dass** die Koch-, Brat- oder Backfläche (4) mindestens eine Vertiefung definierter Form zur Aufnahme von Teig eines zu backenden oder zu garenden Lebensmittels aufweist.

7. Koch-, Brat- oder Backgerät nach einem der Ansprüche 4 bis 6, **dadurch gekennzeichnet, dass** das eine Teil (2) zumindest in Teilen seiner seitlichen Bereiche so ausgebildet ist, dass es eine zu den Rändern (5, 6, 7, 8) des anderen Teils (3) korrespondierende Form aufweist, die das andere Teil (3) im Benutzungszustand des Koch-, Brat- oder Backgeräts (1) seitlich einfasst.

8. Koch-, Brat- oder Backgerät nach einem der Ansprüche 1 bis 7, **dadurch gekennzeichnet, dass** das eine Teil (2) aus Metall besteht.

9. Koch-, Brat- oder Backgerät nach einem der Ansprüche 1 bis 8, **dadurch gekennzeichnet, dass** das eine Teil (2) eine Anzahl drahtartiger Streben (9) aufweist, die parallel zueinander angeordnet sind.

10. Koch-, Brat- oder Backgerät nach einem der Ansprüche 1 bis 8, **dadurch gekennzeichnet, dass** das eine Teil (2) eine Anzahl drahtartiger Streben (9) aufweist, die gitterförmig angeordnet sind.

11. Koch-, Brat- oder Backgerät nach Anspruch 9 oder 10, **dadurch gekennzeichnet, dass** die Streben (9) eine weitgehend ebene Auflagefläche für die Koch-, Brat- oder Backfläche (4) des anderen Teils (3) bilden.

12. Koch-, Brat- oder Backgerät nach einem der Ansprüche 9 bis 11, **dadurch gekennzeichnet, dass** die drahtartigen Streben (9) mit einem umlaufenden Rahmen (10) verbunden, insbesondere verschweißt, sind.

13. Koch-, Brat- oder Backgerät nach Anspruch 12, **dadurch gekennzeichnet, dass** der dem umlaufenden Rahmen (10) benachbarte Abschnitt der Streben (9) so ausgeformt, insbesondere gebogen, ist, dass die Streben (9) zusammen mit dem Rahmen (10) eine schüsselförmige Aufnahme für das andere Teil (3) bilden.

14. Koch-, Brat- oder Backgerät nach einem der Ansprüche 9 bis 13, **dadurch gekennzeichnet, dass** die drahtartigen Streben (9) einen solchen Durchmesser aufweisen und in einem solchen Abstand zueinander angeordnet sind, dass die Nutzung des einen Teils (2) des Koch-, Brat- oder Backgeräts (1) als Grillrost ermöglicht wird.

15. Koch-, Brat- oder Backgerät nach Anspruch 14, **dadurch gekennzeichnet, dass** die drahtartigen Streben (9) einen Durchmesser zwischen 1 mm und 4 mm aufweisen.

16. Koch-, Brat- oder Backgerät nach Anspruch 14 oder 15, **dadurch gekennzeichnet, dass** die drahtartigen Streben (9) einen Abstand zwischen 5 mm und 25 mm voneinander aufweisen.
